# EUROPEAN PATENT SPECIFICATION

(11) **EP 3 299 529 B1**
(45) Date of publication and mention of the grant of the patent: **04.11.2020**
(21) Application number: 17001556.4
(22) Date of filing: 19.09.2017
(51) Int. Cl.: E04B 1/76, B23B 49/00, B23B 51/04

(54) **A CUTTER AND METHOD FOR MAKING DENTS AND FIXING INSULATION**
WERKZEUG UND VERFAHREN ZUM ERSTELLEN EINER VERTIEFUNG ZUM EINBRINGEN EINER DÄMMSTOFFPLATTE
DISPOSITIF ET PROCÉDÉ D'ÉTABLISSEMENT D'UNE EMPREINTE POUR ATTACHER UN MATÉRIAU ISOLANT

(30) Priority: 23.09.2016 SI 201600238
(43) Date of publication of application: 28.03.2018
(73) Proprietor: F. Leskovec, d.o.o., 1354 Horjul (SI)
(72) Inventor: BUH, Gregor, 4224 Gorenja Vas (SI)
(74) Representative: Jersan, Tatjana

(56) References cited:
- EP-A1- 2 977 135
- DE-A1-102004 006 936

## Description

The subject of an invention is a cutter for making dents and fixing insulation with screws especially to exterior walls of buildings. Insulation materials for walls of buildings are particularly insulation boards made of rock wool, expanded polystyrene (EPS), wood wool and similar materials. These are materials with a high degree of specific volume and a low degree of a specific mass, fragile and compressible. Insulation boards can be fixed to a wall with adhesive, nails or screws. In fixing with screws, a hole has to be drilled into the insulation board and into the wall, a plastic sleeve inserted and a screw screwed. It is advised, that after fixing the insulation board to the wall, the surface of the insulation board is even, without bumps to enable applying of protection and/or aesthetic layer.

A known solution for fixing insulation boards is among others the solution according to EP 2 752 533 patent. In the first embodiment, a plastic sleeve with a collapsing joint in the area, where the sleeve is in an insulation board, is disclosed. A cutter grabs a fixing screw and a pressing plate of a plastic sleeve, rotates them and fixates the screw into a plastic sleeve into a wall, that is base material, and a pressing plate cuts into insulation board with its cogs. Plastic sleeve in the area of the insulation board collapses and the screw presses the rotating pressing plate into the insulation board. Depth is determined with a stopping disc in the shape of a circle; when the stopping disc leans onto the surface of the insulation board, screwing is finished. Experience has shown that determining depth with the mentioned stopping disc is unpractical, since - which often occurs in construction - when a hole is not precisely right-angled in all directions, a stopping disc can cut into insulation board deeper on one side while on the other side the depth can be insufficient. This causes uneven surfaces on insulation boards, which obstruct the application of protective and/or aesthetic layers. The use of a plastic sleeve is also relatively demanding since it has to enable the spinning of the pressing plate and its gliding down a plastic sleeve in the area, where a sleeve is in the insulation board. Practice has shown that the use of a stopping disc has damaged the insulation because the tool has hit the insulation due to too fast spinning and the use of overpowering screwing gadgets. Additionally, the practice has shown that the use of the stopping disc can damage worker, which was often the case in the beginning of its usage.

Another solution for fixing insulation is known from document DE 10 2004 006 936 A1. This document discloses the features of the preamble of claim 1.

The task and aim of the invention is the construction of such a cutter and consequently, a plastic sleeve, that will overcome the disadvantages of the known solutions and easy determination of the depth of the fixing plate, wherein the depth of the cut into the insulation board will be equal along the entire surface, and simplified installation of the plastic sleeve will be enabled.

According to the invention, the task has been solved by independent patent claims.

The invention will be described with the help of the following figures:
Fig. 1: a plastic sleeve inserted into a hole; cutter in an approaching position,
Fig. 2: a cutter in a position when a screwing pole fits into a screw head,
Fig. 3: a cutting crown of the cutter cuts into an insulation board,

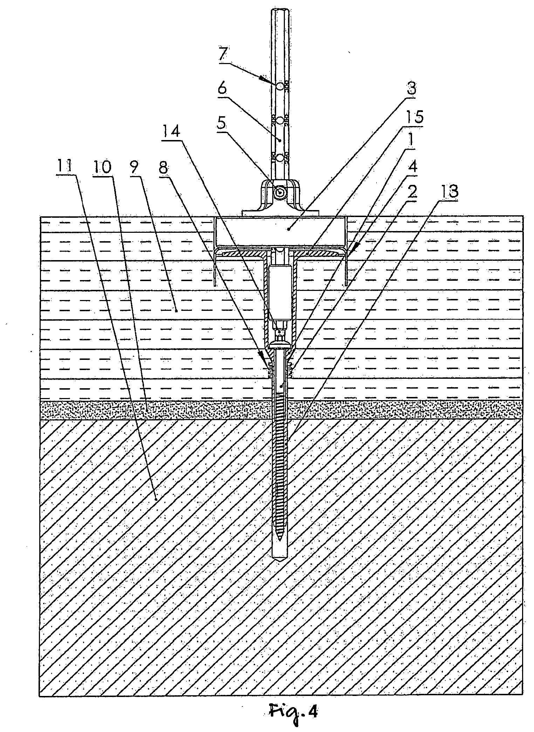

Fig. 4: a cutter finishes screwing and presses a fixing plate to defined depth,

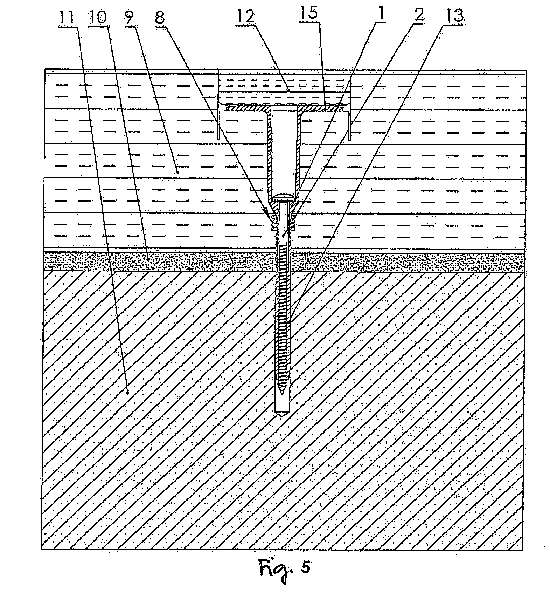

Fig. 5: screwing of an insulation board to the base material is finished.

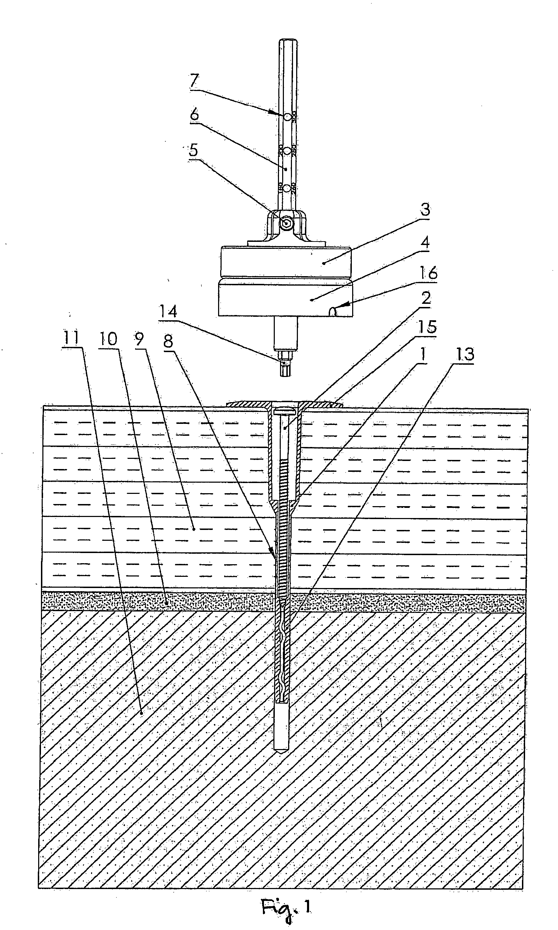

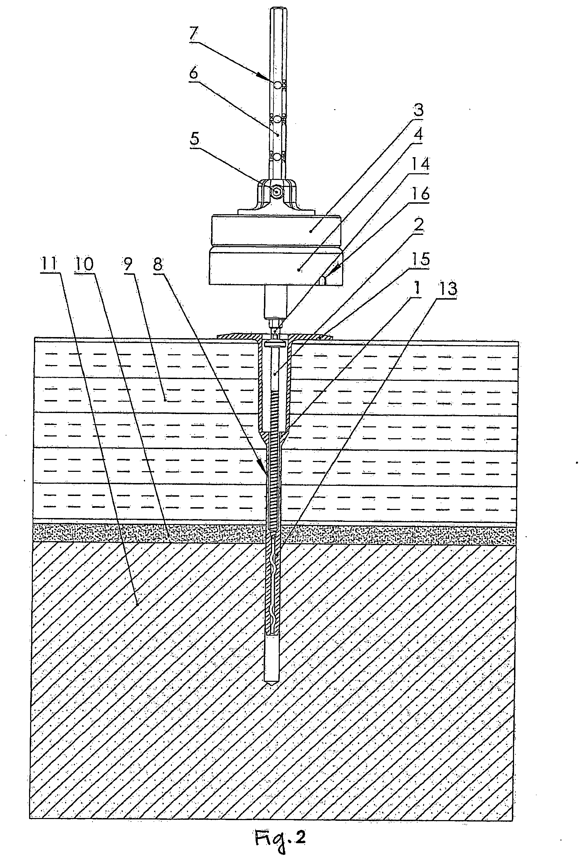

Insulation 9 is usually first ad hoc fixed to a base material 11 with a construction adhesive 10. As shown in fig. 1, a plastic sleeve 1 is inserted into a hole in a base material 11 through insulation 9. A hole has a couple of tenths of a millimetre larger diameter than is the diameter of the lower part of the sleeve 1, i.e. a stem 13. A hole in the base material 11 is made by a drill with a diameter equal to a diameter of a hole. The plastic sleeve 1 fits the hole made in the base material 11 with its lower part, i.e. with its stem 13. Since the sleeve 1 has in its upper part, i.e. part which is plunged only in insulation 9, a larger diameter than in its stem 13, the sleeve presses into the compressible insulation 9 which deforms accordingly. The plastic sleeve 1, therefore, consists of the stem 13, i.e. the lower part of the sleeve, and of the upper part, which has a larger diameter. In the upper part of the sleeve 1 a tubular part is formed with a diameter that a screw 2 head can enter into. Said tubular part of the sleeve 1 represents approximately one third and the stem 13 approximately two thirds, of the whole length of the sleeve 1. In the upper part of the stem 13, that is, in the part where the stem 13 is plunged in insulation 9, the stem 13 has a shrinking area 8. The shrinking area 8 is made in one of the known ways, for example, as an "accordion" in a way that when a longitudinal force is applied to the stem 13 the shrinking area 8 collapses, i.e. it shrinks, which results in shortening of the upper part of the stem in a way that the head of the screw 2 presses to the passage formed between the wider and the narrower part of a sleeve 1. On its upper end, the plastic sleeve 1 has a head in the shape of a plate 15. The function of said plate 15 is to enlarge the surface with which the sleeve 1 is pressed to the insulation 9. The plate 15 has a hole in a centre of the same diameter as is the diameter of the tubular part of the sleeve 1. Through this hole, a screwdriver extension 14 of the cutter enters and fits into the head of the screw 2, as shown in fig. 2.

The cutter is fixed to a screwing pole 6. The screwing pole 6 has shallow holes along its surface, i.e. adjustment holes 7, which enable the positioning of the cutter along the screwing pole 6 and by that the adjustment of the depth, to which the screwdriver extension 14 can reach. The adjustment of the depth, i.e. the positioning of the cutter, is done by a fixing screw 5 which is positioned in a holder 3 of a cutting crown 4. The cutting crown 4 is centrally fixed to the holder 3. The cutting crown 4 has from 2 to 5 percent larger diameter than the holder 3, preferably 3 percent. This enables undisturbed penetration of the holder 3 in the cut surface of insulation 9. Equally, the cutting crown 4 has from 5 to 15 percent larger diameter than is the diameter of the plate 15, preferably 13 percent. In this way, the surface of the plate 15 does not obstruct the cutting of the cutting crown 4 in insulation 9.

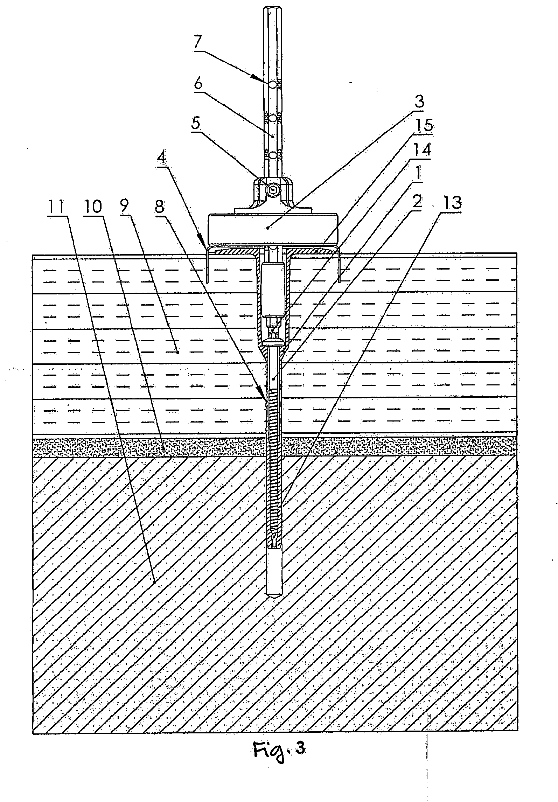

The cutting crown 4 is cylindrical, open at the bottom and with at least one deformation 16 in the lower rim, functioning as a tooth for insulation cutting. When the screwing pole 6 together with the holder 3, the cutting crown 4 and the screwdriver extension 14 spins, then at the same time as the screw 2 is screwed into the stem 13 by the screwdriver extension 14, the cutting crown 4 cuts into insulation 9 as is shown in fig. 3. With further spinning and cutting the plate 15 plunges into the insulation 9 along the insulation wall cut by the cutting crown 4. By its plunging the plate 15 compresses the insulation 9 below it; the screw 2 in the shrinking area 8 shrinks and thus shortens the stem 13 of the sleeve 1. Screwing continues until the upper surface of the holder 3 of the cutting crown 4 levels with the insulation surface 9. Thus the holder 3 serves also to visually determine the depth of screwing and penetration of the plate 15 into the insulation 9. The height of the holder 3, i.e. the position of the holder 3 along the screwing pole 6, therefore determines the depth of the hole for the plate 15, i.e. the height of the holder 3 is equal to the depth of the hole for the plate 15. After the screwing is finished, the cutter is removed and in a hole, made by the cutting crown 4 and plate 15, a cap 12 is inserted. The cap 12 is made from equal or similar materials as insulation 9 and provides a flat surface of the insulation at the point of attachment of the insulation 9 to the base material 11.

## Claims

1. A cutter for making dents and fixing insulation (9) with screws to the exterior walls of the buildings and said insulation are predominantly insulation boards made of rock wool, expanded polystyrene (EPS), wood wool and similar, whereby said insulation is fixed to the base material (11) with screws (2), screwed in plastic sleeves (1) with plates (15), inserted in holes made in the base material and insulation,
**characterized in that**,
said cutter consists of a screwing pole (6) with adjustment holes (7), a holder (3) of a cutting crown (4) with a fixing screw (5), said cutting crown (4) is centrally fixed to the lower part of the holder (3), said cutting crown (4) is cylindrical, open at the bottom and with at least one deformation (16) in the lower rim, functioning as a tooth for insulation (9) cutting, said cutting crown (4) enabling the plate (15) of said plastic sleeve to plunge into the insulation (9) by pressing, and whereby the diameter of the cutting crown (4) is from 2 to 5 percent larger than the diameter of the holder (3) and from 5 to 15 percent larger than the diameter of the plate (15) of the plastic sleeve, and on the screwing pole (6) under the cutting crown (4) a screwdriver extension (14) of the cutter is fixed, whereby the screwing pole (6) has shallow holes along its surface, i being said adjustment holes (7), which enable the positioning of the cutter along the screwing pole (6) and by that the adjustment of the depth, to which the screwdriver extension (14) can reach and whereby the height of the holder (3), i.e. the positioning of the holder (3) along the screwing pole (6) determines the depth of a hole for a plate (15).

2. A process for fixing insulation to the base material with a cutter according to claim 1, whereby the insulation is fixed to the base material with screws, screwed into plastic sleeves with plates, inserted in holes made in the base material and insulation,
**characterized in that**,
into a hole in a base material (11) a plastic sleeve (1) with a plate (15) and a shrinking area (8) is inserted and a screw (2) is inserted into the sleeve (1); the holder (3) of the cutting crown (4) is fixed with the fixing screw (5) into the selected adjustment hole (7) to adjust the depth, to which the screwdriver extension (14) will reach, a the screwdriver extension (14) of the cutter fits into a head of the screw (2); when the screwdriver extension (14) is screwing the screw (2) into a stem (13), a cutting crown (4) simultaneously cuts into insulation (9); when cutting, the plate (15) of the plastic sleeve is plunging into insulation (9) along the insulation wall cut by the cutting crown (4) by pressing, whereby by its plunging, the plate (15) compresses the insulation (9) below; the screw (2) in the shrinking area (8) shrinks and thus shortens the stem (13) of the sleeve (1); screwing continues until the upper surface of the holder (3) of the cutting crown (4) levels with the insulation (9) surface.

## Patentansprüche

1. Fräser zum Erstellen von Vertiefungen zur Befestigung von Dämmstoffen (9) mit Schrauben an den Außenwänden von Gebäuden, wobei es sich bei den genannten Dämmstoffen überwiegend um Dämmplatten aus Steinwolle, expandiertem Polystyrol (EPS), Holzwolle und ähnlichen handelt, wobei die Dämmstoffe mit Schrauben (2) auf dem Grundmaterial (11) befestigt werden, die in Kunststoffhülsen (1) mit, in Bohrungen in das Grundmaterial und die Dämmstoffe eingesetzten Platten (15), eingeschraubt ist,
**dadurch gekennzeichnet, dass**
der Fräser aus einer Schraubstange (6) mit Einstelllöchern (7), einer Halterung (3) der Fräskrone (4) mit einer Befestigungsschraube (5) besteht, wobei die Fräskrone (4) mittig am unteren Teil der Halterung (3) befestigt ist, wobei die Fräskrone (4) zylindrisch, unten offen ist und mindestens eine Ausbuchtung (16) im unteren Rand aufweist, die als Zahn zum Fräsen des Dämmstoffes (9) dient, wobei die Fräskrone (4) das Einrasten der Platte (15) der Kunststoffhülse in den Dämmstoff (9) durch Pressen ermöglicht, und wobei der Durchmesser der Fräskrone (4) 2 bis 5% grösser ist als der Durchmesser der Halterung (3) und 5 bis 15% grösser als der Durchmesser der Platte (15) der Kunststoffhülse, und an der Schraubstange (6) unter der Fräskrone (4) ein Schraubenansatz (14) des Messers befestigt ist, wobei die Schraubstange entlang ihrer Oberfläche flache Löcher aufweist, die Einstelllöcher (7) sind, die die Positionierung des Fräsers entlang der Schraubstange (6) ermöglichen und damit die Einstellung der Tiefe, die der Schraubenansatz (14) erreichen kann, und wobei die Höhe der Halterung, d. h. die Positionierung der Halterung (3) entlang der Schraubstange (6), die Lochtiefe für eine Platte (15) bestimmt.

2. Verfahren zur Befestigung von Dämmstoffen auf dem Grundmaterial mit einem Fräser nach Anspruch 1, **dadurch gekennzeichnet, dass** der Dämmstoff mit Schrauben auf dem Grundmaterial befestigt, in Kunststoffhülsen mit Platten eingeschraubt, in, in das Grundmaterial eingebrachte Bohrungen und einen Dämmstoff eingeschraubt wird, **dadurch gekennzeichnet, dass**
in ein Loch in dem Grundmaterial (11) eine Kunststoffhülse (1) mit einer Platte (15) und einem Schrumpfbereich (8) eingesetzt wird und in die Hülse (1) eine Schraube (2) eingesetzt wird; die Halterung (3) der Fräskrone (4) mit der Befestigungsschraube (5) in das ausgewählte Einstellloch (7) zur Einstellung der Tiefe, die der Schraubansatz (14) erreichen soll, befestigt wird, der Schraubansatz (14) des Fräsers passt in einen Schraubkopf (2); wenn die Schraubansatz (14) die Schraube (2) in einen Schaft (13) einschraubt, fräst gleichzeitig die Fräskrone (4) in den Dämmstoff (9); beim Fräsen wird die Platte (15) der Kunststoffhülse durch Pressen entlang der, von der Fräskrone (4) gefrästen Isolierwand, in einen Dämmstoff (9) eingerastet, wodurch die Platte (15) den darunterliegenden Dämmstoff (9) zusammendrückt; die Schraube (2) im Schrumpfbereich (8) schrumpft und somit den Schaft (13) der Hülse (1) verkürzt; die Verschraubung wird so lange fortgesetzt, bis die Oberseite der Halterung (3) der Fräskrone (4) mit dem Dämmstoff (9) ausgerichtet ist.

## Revendications

1. Dispositif de coupe pour réaliser des empreintes et attacher un matériau isolant (9) avec des vis sur les parois extérieures des bâtiments et ledit matériau isolant étant principalement constitué de panneaux isolants en laine de roche, polystyrène expansé (EPS), laine de bois et matériaux similaires, ledit matériau isolant étant fixé au matériau de base (11) par des vis (2), vissées dans des chevilles en plastique (1) avec des plaques (15), insérées dans des trous réalisés dans le matériau de base et le matériau isolant,
**caractérisé en ce que**
ledit dispositif de coupe est constitué d'un pôle de vissage (6) avec des trous de réglage (7), d'un support (3) d'une couronne de coupe (4) avec une vis de fixation (5), ladite couronne de coupe (4) étant fixée au centre à la partie inférieure du support (3), ladite couronne de coupe (4) étant cylindrique, ouverte au fond et avec au moins une déformation (16) dans le rebord inférieur, fonctionnant comme une dent pour la coupe du matériau isolant (9), ladite couronne de coupe (4) permettant à la plaque (15) de ladite cheville en plastique de plonger dans le matériau isolant (9) par pression, et le diamètre de la couronne de coupe (4) étant de 2 à 5 pour cent supérieur au diamètre du support (3) et de 5 à 15 pour cent supérieur au diamètre de la plaque (15) de la cheville en plastique, et sur le pôle de vissage (6) sous la couronne de coupe (4) est fixée une extension de tournevis (14) du dispositif de coupe, moyennant quoi le pôle de vissage (6) présente des trous peu profonds le long de sa surface, étant lesdits trous de réglage (7), qui permettent le positionnement du dispositif de coupe le long du pôle de vissage (6) et ainsi le réglage de la profondeur, que l'extension de tournevis (14) peut atteindre et où la hauteur du support (3), c'est-à-dire le positionnement du support (3) le long du pôle de vissage (6) détermine la profondeur d'un trou pour une plaque (15).

2. Procédé de fixation d'un matériau isolant sur le matériau de base avec un dispositif de coupe selon la revendication 1, dans lequel le matériau isolant est fixé au matériau de base par des vis, vissées dans des chevilles en plastique avec des plaques, insérées dans des trous réalisés dans le matériau de base et le matériau isolant,
**caractérisé en ce que**
dans un trou dans un matériau de base (11) une cheville en plastique (1) avec une plaque (15) et une zone de rétraction (8) est insérée et une vis (2) est insérée dans la cheville (1) ; le support (3) de la couronne de coupe (4) est fixé avec la vis de fixation (5) dans le trou de réglage sélectionné (7) pour ajuster la profondeur, que l'extension de tournevis (14) atteindra, l'extension de tournevis (14) du dispositif de coupe s'ajuste dans la tête de la vis (2) ; lorsque l'extension de tournevis (14) visse la vis (2) dans une tige (13), la couronne de coupe (4) découpe simultanément le matériau isolant (9) ; pendant la coupe, la plaque (15) de la cheville en plastique est plongée dans le matériau isolant (9) le long de la paroi d'isolation découpée par la couronne de coupe (4) par pression, moyennant quoi en plongeant, la plaque (15) comprime le matériau isolant (9) au-dessous ; la vis (2) dans la zone de rétraction (8) rétrécit et raccourcit ainsi la tige (13) de la cheville ; le vissage se poursuit jusqu'à ce que la surface supérieure du support (3) de la couronne de coupe (4) s'aligne avec la surface du matériau isolant (9).
